# EUROPÄISCHE PATENTSCHRIFT

(11) **EP 0 501 370 B1**
(45) Veröffentlichungstag und Bekanntmachung des Hinweises auf die Patenterteilung: **25.11.1998**
(21) Anmeldenummer: 92103051.6
(22) Anmeldetag: 24.02.1992
(51) Int. Cl.: C08F 32/08

(54) **Verfahren zur Herstellung von Cycloolefin(co)polymeren mit enger Molekulargewichtsverteilung**
Process for preparing cyclo-olefinic(co)polymers with a narrow molecular weigth distribution
Procédé pour prépares des (co)polymères cyclo-oléfiniques, ayant une distribution étroite de poids moléculaires

(30) Priorität: 27.02.1991 DE 4106107
(43) Veröffentlichungstag der Anmeldung: 02.09.1992
(73) Patentinhaber: Ticona GmbH, 65451 Kelsterbach (DE)
(72) Erfinder: Brekner, Michael-Joachim, Dr., W-6000 Frankfurt am Main 71 (DE); Osan, Frank, Dr., W-6233 Kelkheim (Taunus) (DE)

(56) Entgegenhaltungen:
- EP-A- 0 156 464
- EP-A- 0 283 164
- EP-A- 0 304 671
- EP-A- 0 407 870
- EP-A- 0 485 893
- PATENT ABSTRACTS OF JAPAN vol. 11, no. 60 (C-405)(2507) 24. Februar 1987

## Beschreibung

Die Erfindung bezieht sich in erster Linie auf ein Verfahren zur Herstellung von Homo- und Copolymeren von polycyclischen Olefinen mit sehr enger Molekulargewichtsverteilung, bei denen keine Ringöffnung erfolgt.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 4 178 424) oder Öffnung der Doppelbindung (vgl. EP-A 156 464, EP-A 283 164, EP-A-0 304 671 und EP-A-0 407 870)

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung weist bei cyclischen Olefinen eine relativ niedrige Polymerisationsgeschwindigkeit (Umsatzrate) auf.

Bei der Verarbeitung von Polymeren mittels Spritzgießen oder bei der Verstreckung von Polymerfasern ist eine möglichst enge Molekulargewichtsverteilung der Polymeren von großem Vorteil.

Es ist bekannt, daß man bei radikalischen Polymerisationen aber auch bei der klassischen Ziegler-Polymerisation Molekulargewichtsverteilungen erreicht, die breit sind, d.h., daß Mw/Mn deutlich größer als 2 ist. Bei der mittels MetallocenKatalysatoren durchgeführten Polymerisation von Olefinen ist eine Molekulargewichtsverteilung Mw/Mn = 2 realisierbar. Für spezielle Anwendungen (z.B. Präzisionsspritzguß) wären jedoch noch engere Molekulargewichtsverteilungen wünschenswert.

Somit bestand die Aufgabe, möglichst eng verteilte Polycycloolefine und Cycloolefincopolymere mit Hilfe eines möglichst einfachen Verfahrens herzustellen.

Es wurde überraschend gefunden, daß durch die Verwendung spezieller Metallocenkatalysatoren in Kombination mit bestimmten Polymerisationsbedingungen, wie Konzentration und Temperatur, sowie insbesondere durch die Wahl bestimmter Polymerisationszeiten Polycycloolefine und Cycloolefincopolymere mit Molekulargewichtsverteilungen Mw/Mn ≤ 1,7 zugänglich sind.

Dieser Befund ist außergewöhnlich überraschend, weil alle bisher bekannten theoretischen Abhandlungen über die Ziegler-Polymerisation eine Verteilung von minimal Mw/Mn = 2 zulassen. Engere Verteilungen, wie sie erfindungsgemäß gefunden wurden, weisen darauf hin, daß der Großteil der Polymerketten während der gesamten Polymerisationsdauer aufgebaut wird, d.h., die Polymerisation kann unter bestimmten Bedingungen sehr ähnlich einer lebenden Polymerisation verlaufen, wie sie z.B. von der anionischen Polymerisation von Styrol bekannt ist.

Die Erfindung betrifft somit ein Verfahren zur Herstellung eines Cycloolefinpolymers oder -copolymers mit enger Molekulargewichtsverteilung (Mw/Mn) ≤ 1,7 durch Polymerisation von 0,1 bis 100 Gew.-%, bezogen auf die Gesamtmenge der Monomeren, mindestens eines Monomers der Formeln I, II, III, IV, V oder VI 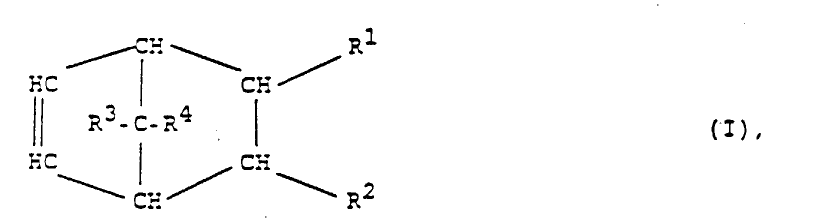 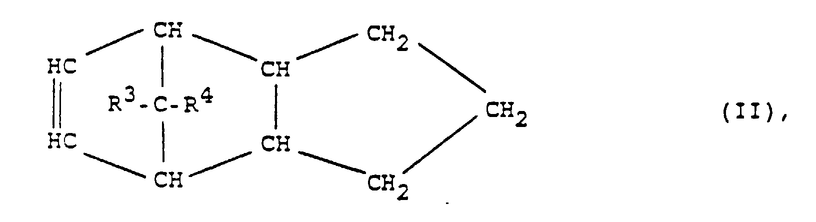 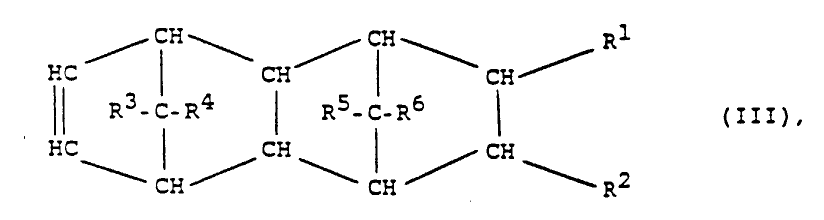 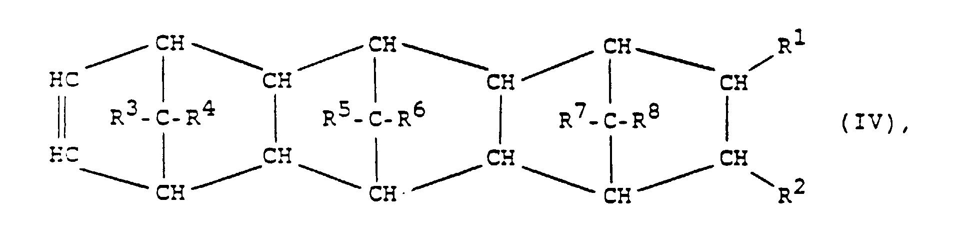 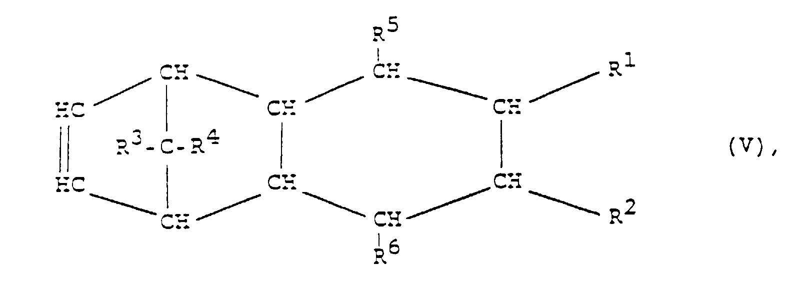 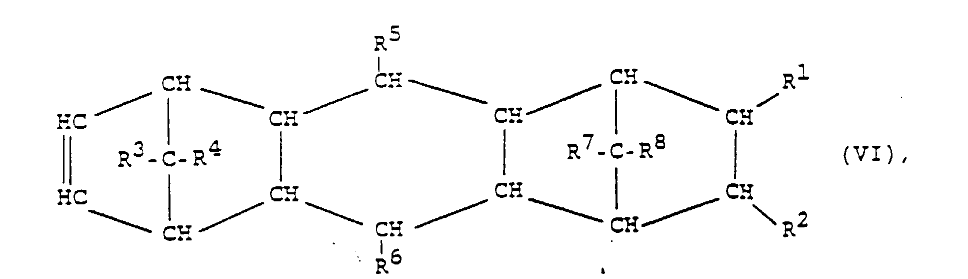 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 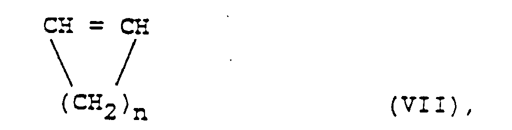 worin n eine Zahl von 2 bis 10 ist, und
0 bis 99,9 Gew.-%, bezogen auf die Gesamtmenge der Monomeren, Ethylen bei Temperaturen von -78 bis 40°C und einem Druck von 0,01 bis 64 bar, in Gegenwart eines Katalysators, welcher aus einem Aluminoxan der Formel VIII 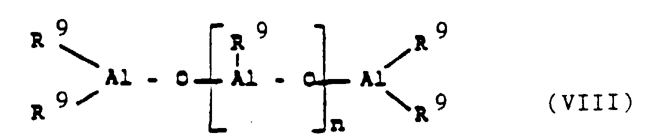 für den linearen Typ und/oder der Formel X 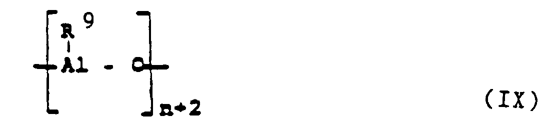 für den cyclischen Typ, wobei in den Formeln VIII und IX die Reste R⁹ gleich oder verschieden sind.und eine C₁-C₆-Alkylgruppe oder Phenyl oder Benzyl bedeuten und n eine ganze Zahl von 0 bis 50 ist, und einem Metallocen der Formel X 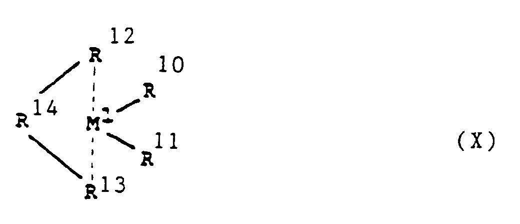 besteht, worin
- M¹: Titan, Zirkon, Hafnium, Vanadium, Niob oder Tantal ist,
- R¹⁰ und R¹¹: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R¹² und R¹³: einen ein- oder mehrkernigen Kohlenwasserstoffrest, welcher mit dem Zentralatom M' eine Sandwichstruktur bilden kann, bedeuten,
- R¹⁸: 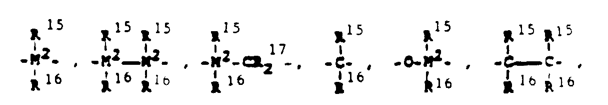 = BR¹⁵, = AlR¹⁵, -Ge-, -Sn-, -O-, -S-, = SO, SO₂, = NR¹⁵, = CO, = PR¹⁵, oder = P(O)R¹⁵ ist, wobei R¹⁵, R¹⁶ und R¹⁷ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Alrylalkylgruppe, eine C₈-C₄₀-Arylalkenylgruppe oder eine C₇-C₄₀-Alkylarylgruppe bedeuten oder R¹⁵ und R¹⁶ oder R¹⁵ und R¹⁷ jeweils mit den sie verbindenden Atomen einen Ring bilden, und
- M²: Silizium, Germanium oder Zinn ist, wobei man die Polymerisation zu einem Zeitpunkt abbricht, an dem Mw/Mn ≤ 1.7 ist.

Dabei steht Alkyl für geradkettiges oder verzweigtes Alkyl.

Das monocyclische Olefin VII kann für die Zwecke der Erfindung auch substituiert sein (z.B. durch Alkyl- oder Arylreste).

Im erfindungsgemäßen Verfahren wird mindestens ein polycyclisches Olefin der Formeln I, II, III, IV, V oder VI, vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.

Insbesondere werden Copolymere von polycyclischen Olefinen, vorzugsweise der Formeln I und III, mit Ethylen hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Das polycyclische Olefin (I bis VI) wird in einer Menge von 0,1 bis 100 Gew.-% und das monocyclische Olefin (VII) in einer Menge von 0 bis 99,9 Gew.-%, jeweils bezogen auf die Gesamtmenge der Monomeren, eingesetzt.

Die Konzentration des offenkettigen Olefins, d.h. Ethylen, ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine VII mit Ethylen lassen sich vorteilhaft nach dem beschriebenen Verfahren erhalten. Von den Cycloolefinen VII ist Cyclopenten, das substituiert sein kann, bevorzugt.

Der für das erfindungsgemäße Verfahren zu verwendende Katalysator besteht aus einem Aluminoxan und mindestens einem Metallocen (Übergangsmetallkomponente) der Formel X

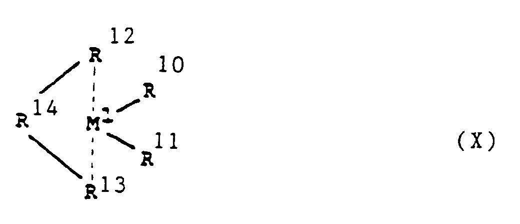

In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.

R¹⁰ und R¹¹ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R¹² und R¹³ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R¹² Fluorenyl und R¹³ Cyclopentadienyl.

R¹⁴ ist eine ein- oder mehrgliedrige Brücke, welche die Reste R¹² und R¹³ verknüpft und bedeutet vorzugsweise 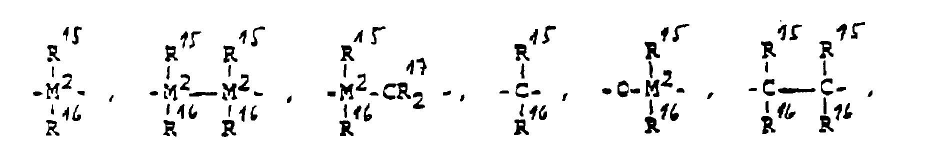 = BR¹⁵, = AlR¹⁵, -Ge-, -Sn-, -O-, -S-, = SO, = SO₂, = NR¹⁵, = CO, = PR¹⁵ oder = P(O)R¹⁵, wobei R¹⁵, R¹⁶ und R¹⁷
gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder R¹⁵ und R¹⁶ oder R¹⁵ und R¹⁷ bilden jeweils zusammen mit den sie verbindenden Atomen einen Ring.

M² ist Silizium, Germanium oder Zinn, bevorzugt Silizium oder Germanium.

Die verbrückten Metallocene können nach folgendem bekannten Reaktionsschema hergestellt werden:

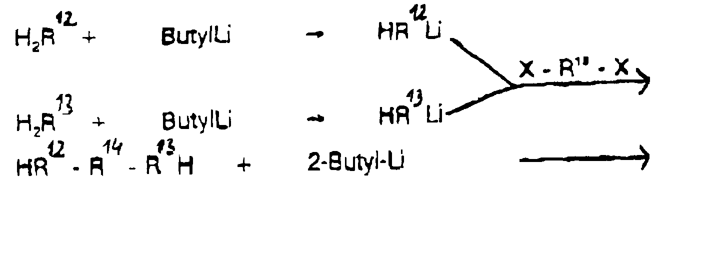

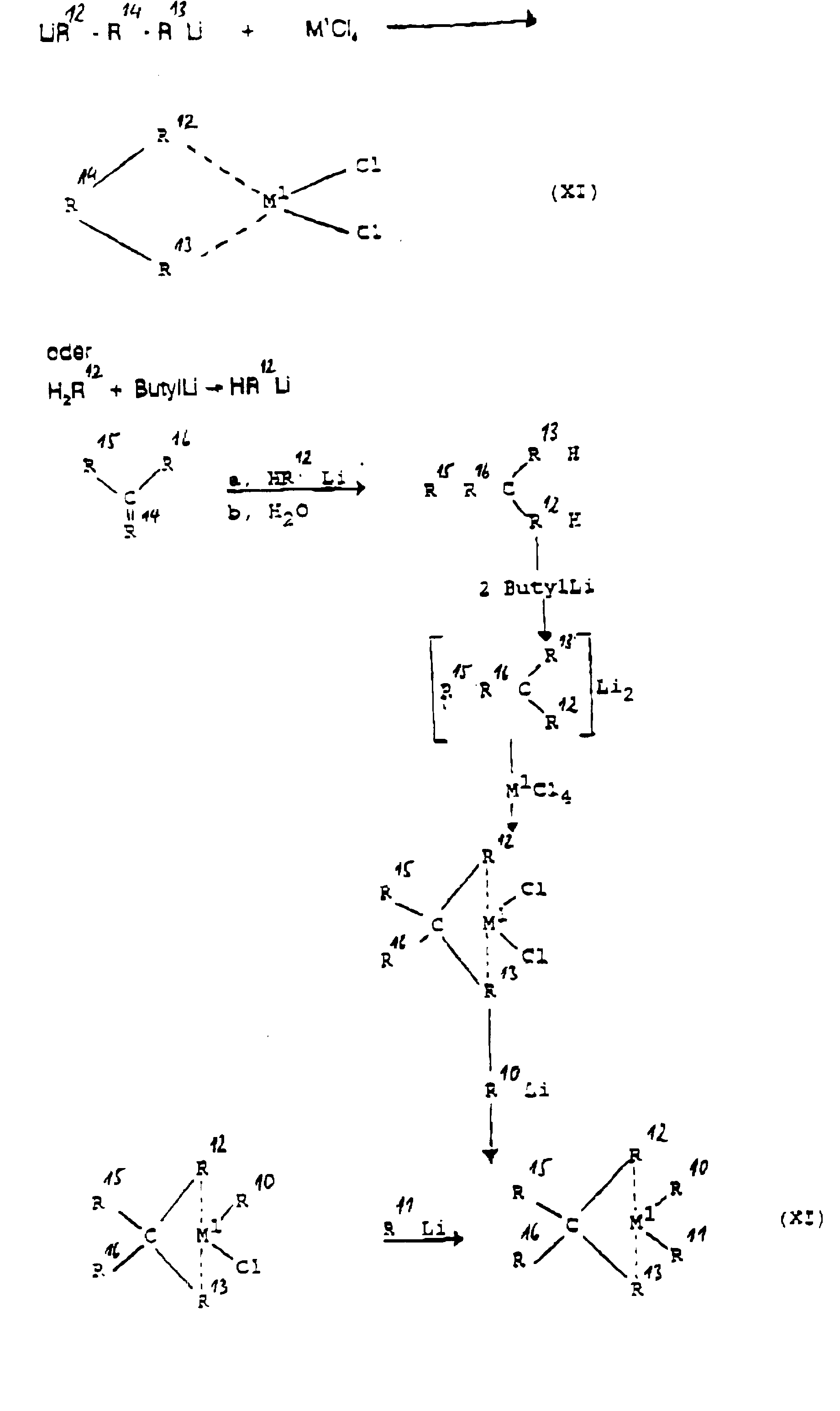

Das obige Reaktionsschema gilt auch für die Fälle R¹⁵ = R¹⁶ und/oder R¹⁰ = R¹¹ (vgl. Journal of Organometallic Chem. 288 (1985) 63-67 und EP-A 320 762).

Bevorzugt eingesetzte Metallocene sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1 -Silacyclobutyl-bis-(1 -indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid.

Besonders bevorzugt sind dabei:
rac-Dimethylsilyl-bis-(1indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
rac-Diphenylsilyl-bis-(1-indenyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid oder
Phenylmethylmethylen-(9-fluorenyl)-cyclopentadienyl-zirkondichlorid.

Der Cokatalysator ist ein Aluminoxan der Formel VIII für den linearen Typ und/oder der Formel IX für den cyclischen Typ. In diesen Formeln können die Reste R⁹ gleich oder verschieden sein und bedeuten eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R⁹ werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (VIII) und/oder (IX) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt werden Toluol oder Cyclohexan verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Falls dem Reaktionsgemisch eine geringere Menge an Lösemittel zugesetzt wird, dann handelt es sich um gebräuchliche inerte Lösemittel wie z.B. aliphatische oder cycloaliphatische Kohlenwasserstoffe (z.B. Cyclohexan), Benzin- bzw. hydrierte Dieselölfraktionen oder Toluol.

Die Polymerisation findet in verdünnter Lösung (< 80 Vol.-% Cycloolefin), in konzentrierter Lösung (> 80 Vol.-% Cycloolefin) oder direkt im flüssigen unverdünnten Cycloolefinmonomer statt.

Je nach der Aktivität des Katalysators, dem gewünschten Molekulargewicht und der gewünschten Molekulargewichtsverteilung müssen Temperatur und Reaktionszeit entsprechend abgestimmt werden. Auch die Konzentration der Monomeren wie auch Art des Lösungsmittels müssen dabei berücksichtigt werden, zumal diese Parameter wesentlich die relativen Einbauraten der Monomeren bestimmen und somit entscheidend für Glastemperatur bzw. thermische Formbeständigkeit der Polymere sind.

Je tiefer die Temperatur innerhalb des Bereichs von -78 bis 40°C gewählt wird, um so länger kann die Polymerisationsdauer bei gleicher Breite der Molekulargewichtsverteilung Mw/Mn sein (vgl. Tab. 2). Bevorzugt sind Molekulargewichtsverteilungen Mw/Mn ≤ 1,4.

Möchte man auch ein bestimmtes Molekulargewicht ansteuern, so muß die Reaktionsdauer auch auf das gewünschte Molekulargewicht eingestellt werden.

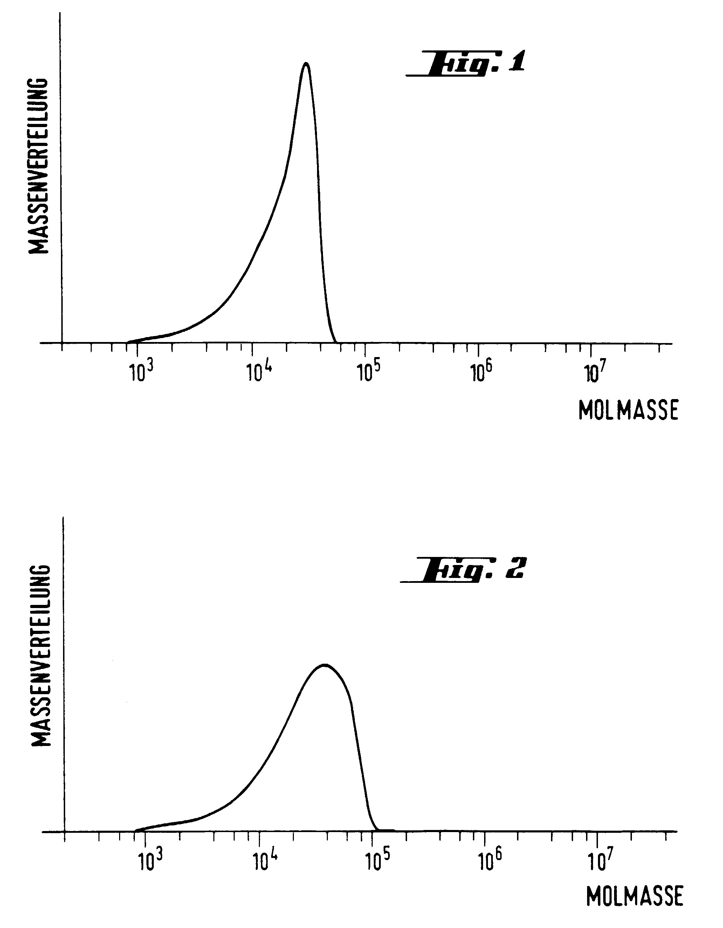

Die Bestimmung der erforderlichen Reaktionszeit bis zum Abbruch der Reaktion, die in Abhängigkeit von den genannten Reaktionsparametern und der Cycloolefineinbaurate variiert, erfolgt durch einfache Probennahme wie in den Ausführungsbeispielen beschrieben. Aus Versuchsreihen können Diagramme erstellt werden aus denen dann die erforderlichen Zeiten entnommen (vorbestimmt) werden können (vgl. Fig. 1).

Um die engen Molekulargewichtsverteilungen zu erreichen, ist auf Übertragungsreagenzien, wie z.B. Wasserstoff, weitgehend zu verzichten. Eine Steuerung des Molekulargewichts über die Reaktionszeit ist möglich.

Wenn reines offenkettiges Olefin, d.h. Ethylen, aufgedrückt wird, werden Drucke zwischen 0,01 und 64 bar eingesetzt, bevorzugt 2 bis 40 bar und besonders bevorzugt 4 bis 20 bar. Wird neben dem offenkettigen Olefin auch ein inertes Gas z.B. Stickstoff oder Argon aufgedrückt, so liegt der Gesamtdruck im Reaktionsgefäß bei 4 bis 64 bar, bevorzugt bei 4 bis 40 bar und besonders bevorzugt bei 4 bis 25 bar. Falls die cycloolefinische Komponente unverdünnt vorliegt, wird auch bei hohen Drucken eine hohe Cycloolefineinbaurate erreicht.

Besonders vorteilhaft sind kontinuierliche sowie mehrstufige Polymerisationsverfahren, weil sie einen rationalen Einsatz des Cycloolefins ermöglichen. Auch läßt sich bei kontinuierlichen Verfahren das polycyclische Olefin, welches als Restmonomer zusammen mit dem Polymeren anfallen kann, zurückgewinnen und wieder dem Reaktionsgemisch zuführen.

Die Metallocenverbindung wird in einer Konzentration, bezogen auf das Übergangsmetall, von 10⁻³ bis 10⁻⁸, vorzugsweise 10⁻⁴ bis 10⁻⁶ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 x 10⁻² mol pro dm³ Reaktorvolumen verwendet, bezogen auf den Gehalt an Aluminium. Prinzipiell sind aber auch höhere Konzentrationen möglich.

Außer den genannten, verbrückten Metallocenen sind grundsätzlich auch Metallocene mit gleichen bzw. ähnlichen, unverbrückten Liganden einsetzbar. Bei diesen Metallocenen müssen unter vergleichbaren Reaktionsbedingungen deutlich kürzere Reaktionszeiten als bei den verbrückten Metallocenen gewählt werden.

Bei der Herstellung von Copolymerisaten kann die Variation der Molverhältnisse des polycyclischen Olefins zum (bevorzugt) eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 75 Mol-% der cyclischen Komponenten und besonders bevorzugt werden Einbauraten zwischen 35 und 65 Mol-% der cyclischen Komponenten.

Mit dem beschriebenen Verfahren lassen sich amorphe Copolymere herstellen. Die Copolymere sind transparent. Sie sind beispielsweise in Dekahydronaphthalin bei 135°C und in Toluol bei Raumtemperatur löslich. Die Polymere sind thermoplastisch verarbeitbar. Sowohl beim Extrudieren als auch beim Spritzgießen wurde kein bemerkenswerter Abbau oder Viskositätsaufbau gefunden.

Die hergestellten Materialien eignen sich zur Herstellung von Formkörpern, besonders zur Herstellung von Extrusionsteilen wie Folien, Schläuchen, Rohren, Stangen und Fasern und zur Herstellung von Spritzgußartikeln beliebiger Form und Größe. Eine wichtige Eigenschaft der Materialien ist neben der guten Fließfähigkeit der Schmelze ihre Transparenz. Dadurch kommen besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die Polymere sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid sowie Cycloolefin(co)polymere mit einer Molekulargewichtsverteilung Mw/Mn ≥ 2.

Um besondere Schmelzeigenschaften zu erreichen, können auch mehrere Polymere miteinander legiert werden.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt. Die Molekulargewichtsverteilung (Mw/Mn) und das Molekulargewicht (Mw) der Reaktionsprodukte wurden durch Gelpermeationschromatographie bestimmt.

### Beispiel 1 (nicht erfindungsgemäß)

Ein sauberer und trockener 1,5-dm³-Polymerisationsreaktor mit Rührer wurde mit Stickstoff und dann mit Ethylen gespült und mit 576 ml einer 85 volumenprozentigen toluolischen Norbornenlösung gefüllt.

Unter Rühren wurde dann der Reaktor auf einer Temperatur von 70°C gehalten und 6 bar Ethylen (Überdruck) aufgedrückt.

Danach wurden 20 cm³ toluolische Methylaluminoxanlösung (MAO-Lsg.) (10,1 Gew.-% Methylaluminoxan mit Molmasse 1300 g/mol nach kryoskopischer Bestimmung) in den Reaktor dosiert und die Mischung 15 min bei 70°C gerührt, wobei durch Nachdosieren der Ethylendruck bei 6 bar gehalten wurde. Parallel dazu wurden 60 mg rac-Dimethylsilyl-bis-(1-indenyl)-zirkondichlorid )-zirkondichlorid in 10 cm³ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 UPM) wurde dann bei 70°C polymerisiert, wobei der Ethylendruck durch Nachdosieren bei 6 bar gehalten wurde.

Im Abstand von 15 Min nach der Katalysatorzugabe wurden 50 ml Proben aus dem Reaktionsmedium über eine Schleuse entnommen.

Die Proben wurden schnell in ein Rührgefäß abgelassen, in dem 100 cm³ Isopropanol (Stopper; Reaktionsabbruch) vorgelegt waren. Die Mischung wurde in 2 dm³ Aceton eingetropft, 10 min gerührt und dann der suspendierte polymere Feststoff abfiltriert.

Das abfiltrierte Polymer wurde dann in 2 dm³ einer Mischung aus zwei Teilen 3-normaler Salzsäure und einem Teil Ethanol gegeben und diese Suspension 2 Stunden gerührt. Das Polymer wurde dann erneut abfiltriert, mit Wasser neutral gewaschen und bei 80°C und 0,2 bar 15 Stunden getrocknet.

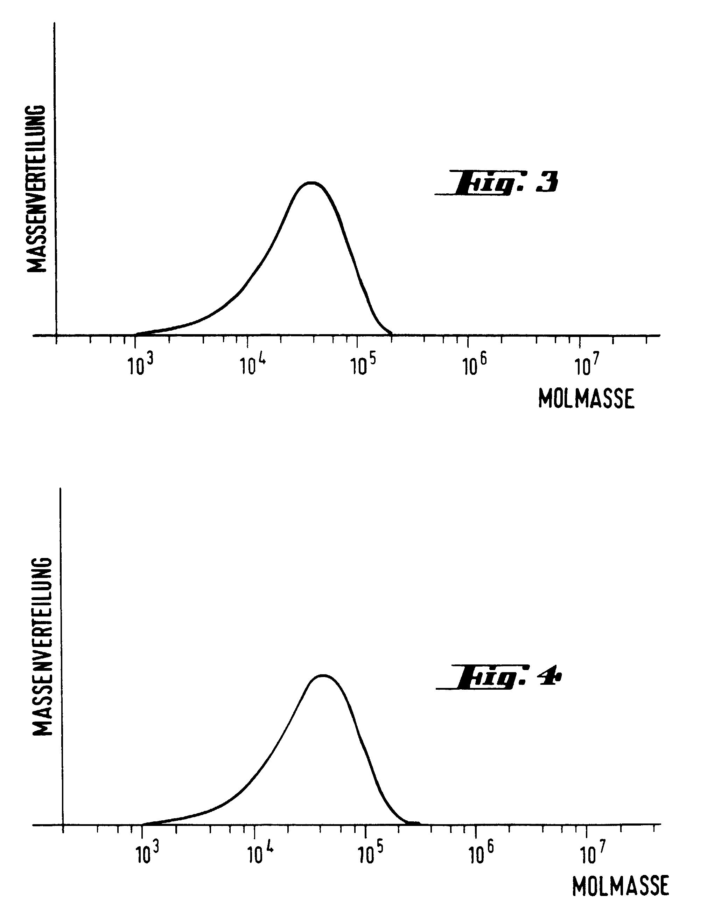

Die Eigenschaften der Proben sind in Tabelle 1 und den Fig. 1 bis 4 wiedergegeben. Dabei zeigen die Fig. 1 (Probe A) - 4 (Probe D) deutlich die Entwicklung des Molekulargewichts Mw (Erhöhung) und der Molekulargewichtsverteilung (Verbreiterung) mit fortschreitender Reaktionszeit.

**Tabelle 1**

| Probe | Zeit nach Kat.-Zugabe (min) | Glastemperatur (°C) | Mw (g/mol) | Mw/Mn |
|---|---|---|---|---|
| A | 15 | 162 | 2,06 x 10⁴ | 1,7 |
| B | 30 | 161 | 3,25 x 10⁴ | 2,2 |
| C | 45 | 159 | 3,95 x 10⁴ | 2,2 |
| D | 60 | 158 | 4,57 x 10⁴ | 2,5 |

### Beispiel 2

Es wurde analog Beispiel 1 verfahren, wobei folgende Parameter geändert wurden:

| | |
|---|---|
| Reaktionstemperatur | 20°C |
| Katalysatormenge | 240 mg |
| Probenentnahme | 10 minütig |

Die Eigenschaften der Proben sind in Tabelle 2 wiedergegeben.

**Tabelle 2**

| Probe | Zeit nach Kat.-Zugabe (min) | Glastemperatur (°C) | Mw (g/mol) | Mw/Mn |
|---|---|---|---|---|
| E | 10 | 140 | 1,67 x 10⁴ | 1,1 |
| F | 20 | 143 | 2,83 x 10⁴ | 1,1 |
| G | 30 | 143 | 3,99 x 10⁴ | 1,1 |
| H | 40 | 144 | 4,88 x 10⁴ | 1,1 |

### Beispiel 3 (nicht erfindungsgemäß)

Analog Beispiel 1 wurden 54 g eines Polymer hergestellt, wobei abweichend von Beispiel 1 folgende Polymerisationsbedingungen gewählt wurden:
- Konzentration der eingesetzten Norbornenlösung: 27 %;
- Ethylendruck: 3 bar;
- Katalysator: Fluorenyl-cyclopentadienyl-diphenyl-carbyl-zirkoniumdichlorid;
- Menge Katalysator: 10 mg;
- Menge Methylaluminoxanlösung: 20 ml;
- Reaktionsdauer: 30 Min.

Das erhaltene Polymer hat eine Glastemperatur von 141°C, ein Mw = 1,63 • 10⁵ und eine Molekulargewichtsverteilung Mw/Mn = 2,0.

### Beispiel 4

Die Polymerisation erfolgte analog Beispiel 1. Als Katalysatorlösung wurden 40 cm³ MAO-Lsg mit 500 mg rac-Dimethylsilyl-bis-(1-indenyl)zirkondichlorid eingesetzt. Es wurde 30 min bei 6°C und 4 bar Ethylenüberdruck polymerisiert. Es konnten 3,8 g Produkt erhalten werden. Die Glastemperatur betrug 122°C. Nach GPC (analog Beispiel 1 + 2) wurde ein Molekulargewicht Mw von 2540 g/mol und eine Molekulargewichtsverteilung Mw/Mn von 1,15 gefunden.

### Beispiel 5

Die Polymerisation erfolgte analog Beispiel 4. Es wurde 10 min bei 20°C und 6 bar Ethylenüberdruck polymerisiert. Isoliert wurden 10,4 g Produkt. Die Glastemperatur betrug 142°C. Das Molekulargewicht Mw betrug 7240 g/mol und die Molekulargewichtsverteilung Mw/Mn betrug 1,10.

### Beispiel 6

Es wurden 2,4 g eines Polymers gemäß Beispiel 3 und 0,6 g eines Polymers gemäß Beispiel 4 in 147 g Toluol gelöst und anschließend durch langsames Eintropfen in Aceton gefällt. Das ausgefällte Material wurde dann bei 80°C einen Tag im Trockenschrank getrocknet. Die so erhaltene Polymerlegierung zeigte bei der DSC-Messung mit einer Aufheizrate von 20°C/Minute eine Glastemperatur von 138°C.

### Beispiel 7

Es wurden 48 g eines Polymers gemäß Beispiel 3 und 12 g eines Polymers gemäß Beispiel 5 gemischt und in einem "Rheomix-600-Meßkneter" der Firma Haake 15 Minuten, mit einer Drehzahl von 60 Umdrehungen/Minute, bei 225°C geknetet. Die dabei erhaltene Legierung war transparent und zeigte bei der DSC-Messung mit einer Aufheizrate von 20°C/Minute eine Glastemperatur von 141°C.

### Beispiel 8

Aus den Materialien gemäß den Beispielen 3, 6 und 7 wurden durch 15 Minuten Pressen bei 225°C runde Pressplatten mit einem Durchmesser von 25 mm hergestellt. Alle Pressplatten waren farblos und transparent. Zur Bewertung und zum Vergleich der Verarbeitbarkeit dieser Materialien wurden die so erhaltenen Pressplatten zur Bestimmung der Viskosität ETA verwendet. Das dazu benutzte Gerät war ein "Rheometrics Dynamic Spektrometer RDS 2". Die Messungen wurden in der Geometrie "Platte-Platte" bei 270°C und bei zwei Frequenzen durchgeführt. Die Messergebnisse sind in Tabelle 3 zusammengefaßt.

**Tabelle 3**

| Probenbezeichnung nach Beispiel-Nr. | Viskosität ETA (Pa·s) | |
|---|---|---|
| | Frequenz 1 1 rad/s | Frequenz 2 10 rad/s |
| 3 | 6,41•10³ | 2,63•10³ |
| 6 | 2,47•10³ | 1,09•10³ |
| 7 | 2,67•10³ | 1,15•10³ |

## Patentansprüche

1. Verfahren zur Herstellung eines Cycloolefinpolymers oder -copolymers mit einer Molekulargewichtsverteilung (Mw/Mn) ≤ 1,7 durch Polymerisation von 0,1 bis 100 Gew.-%, bezogen auf die Gesamtmenge der Monomeren, mindestens eines Monomers der Formeln I, II, III, IV, V oder VI 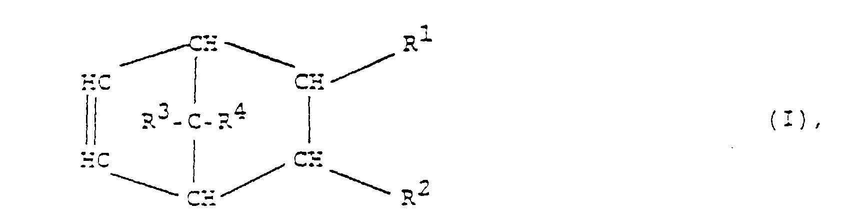 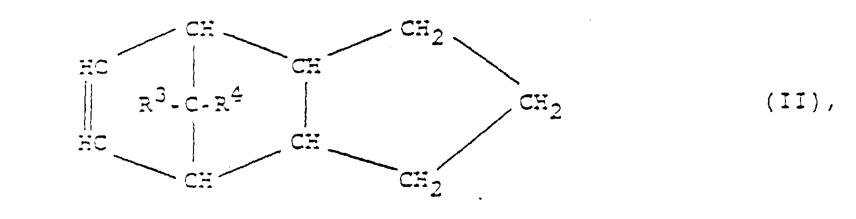 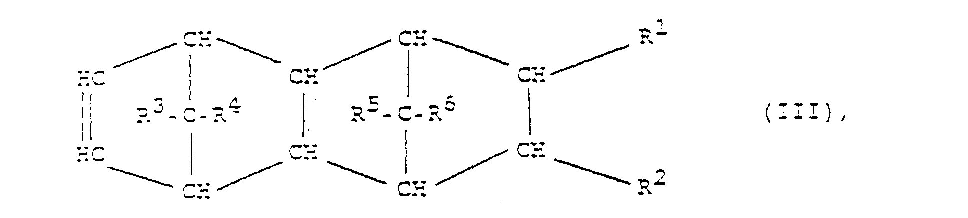 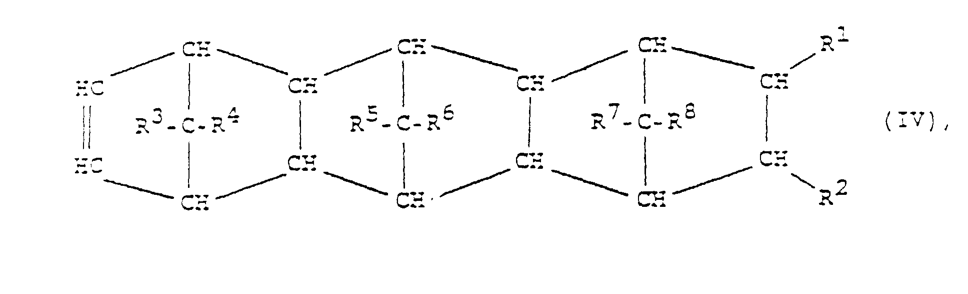 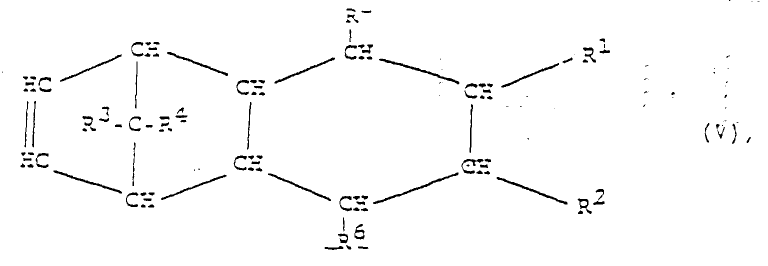 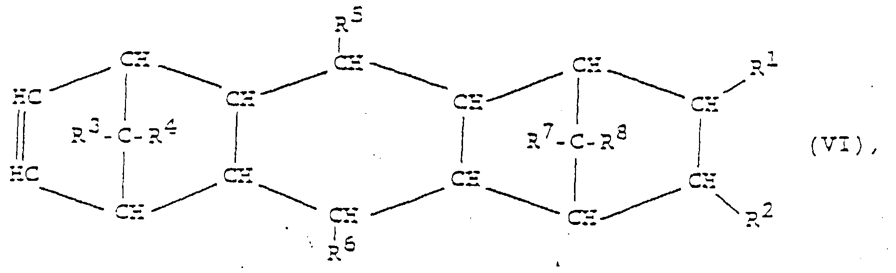 worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 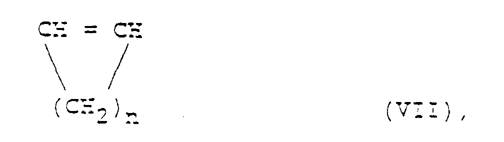 worin n eine Zahl von 2 bis 10 ist, und
0 bis 99,9 Gew.-%, bezogen auf die Gesamtmenge der Monomeren, Ethylen bei Temperaturen von -78 bis 40°C und einem Druck von 0,01 bis 64 bar, in Gegenwart eines Katalysators, welcner aus einem Aluminoxan der Formel VIII 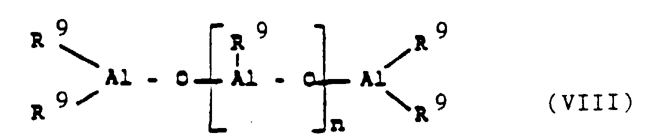 für den linearen Typ und/oder der Formel IX 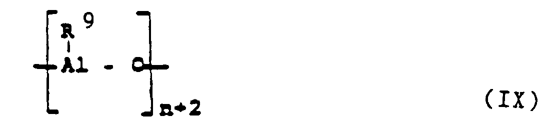 für den cyclischen Typ, wobei in den Formeln VIII und IX die Reste R⁹ gleich oder verschieden sind und eine C₁-C₆-Alkylgruppe oder Phenyl oder Benzyl bedeuten und n eine ganze Zahl von 0 bis 50 ist, und einem Metallocen der Formel X 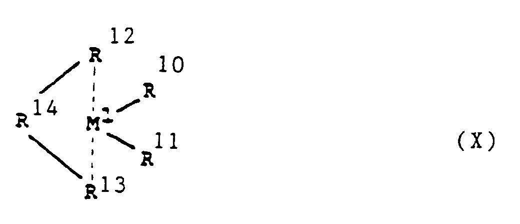 besteht, worin
M¹ Titan, Zirkon, Hafnium, Vanadium, Niob oder Tantal ist,
R¹⁰ und R¹¹ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R¹² und R¹³ einen ein- oder mehrkernigen Kohlenwasserstoffrest, welcher mit dem Zentralatom M¹ eine Sandwichstruktur bilden kann, bedeuten,
R¹⁸ 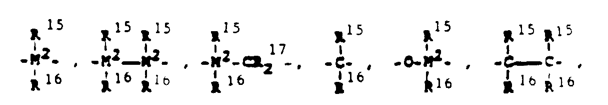 = BR¹⁵, = AlR¹⁵, -Ge-, -Sn-, -O-, -S-, = SO, = SO₂, = NR¹⁵, = CO, = PR¹⁵, oder = P(O)R¹⁵ ist, wobei R¹⁵, R¹⁶ und R¹⁷ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁵ und R¹⁶ oder R¹⁵ und R¹⁷ jeweils mit den sie verbindenden Atomen einen Ring bilden, und
M² Silizium, Germanium oder Zinn ist, wobei man die Polymerisation zu einem Zeitpunkt abbricht, an dem Mw/Mn ≤ 1,7 ist.

2. Verfahren gemäß Anspruch 1, oder 2, dadurch gekennzeichnet, daß man die Polymerisation zu einem Zeitpunkt abbricht, an dem Mw/Mn ≤ 1,4 ist.

## Claims

1. A process for the preparation of a cycloolefin polymer or copolymer with a molecular weight distribution (Mw/Mn) ≤ 1.7 by polymerization of 0.1 to 100% by weight, based on the total amount of the monomers, of at least one monomer of the formulae I, II, III, IV, V or VI 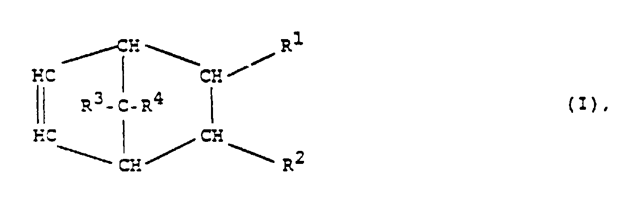 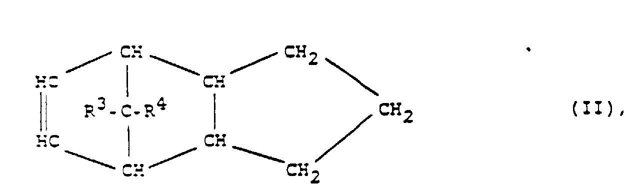 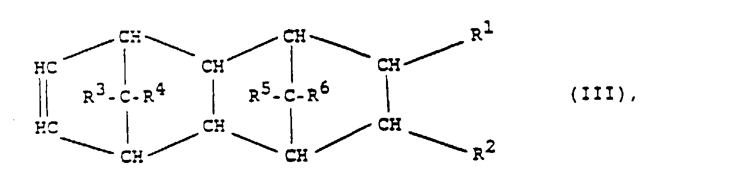 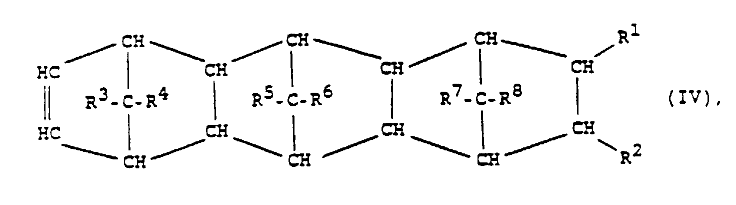 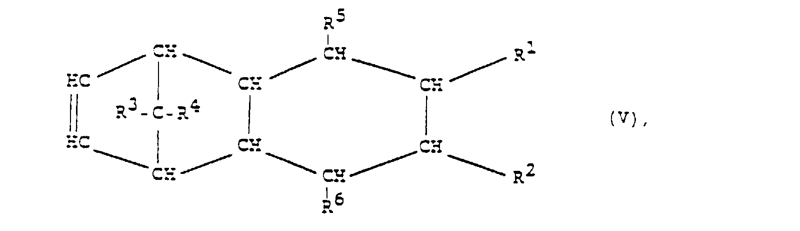 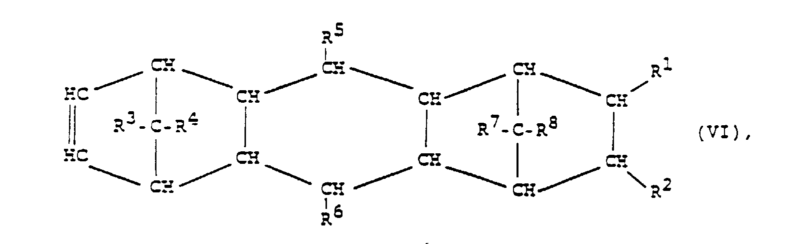 in which R¹, R², R³, R⁴, R⁵, R⁶, R⁷ and R⁸ are identical or different and are a hydrogen atom or a C₁-C₈-alkyl radical, it being possible for identical radicals in the different formulae to have a different meaning,
0 to 99.9% by weight, based on the total amount of the monomers, of a cycloolefin of the formula VII 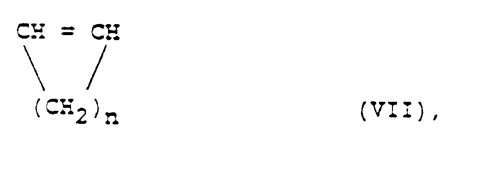 in which n is a number from 2 to 10, and
0 to 99.9% by weight, based on the total amount of the monomers, of ethylene at temperatures from -78 to 40°C and under a pressure of from 0.01 to 64 bar, in the presence of a catalyst which is composed of an aluminoxane of the formula VIII 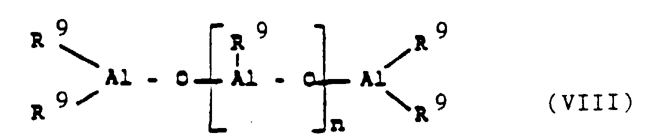 for the linear type and/or of the formula IX 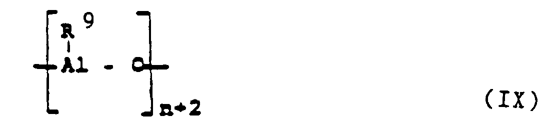 for the cyclic type, where the radicals R⁹ in the formulae VIII and IX are identical or different and are a C₁-C₆-alkyl group or phenyl or benzyl, and n is an integer from 0 to 50, and of a metallocene of the formula X 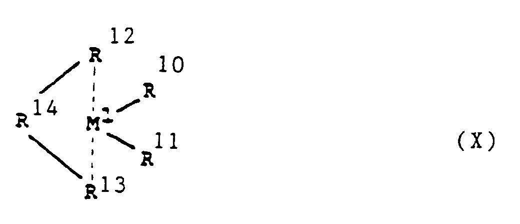 in which
M¹ is titanium, zirconium, hafnium, vanadium, niobium or tantalum,
R¹⁰ and R¹¹ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R¹² and R¹³ are a mono- or polynuclear hydrocarbon radical which with the central atom M¹ can form a sandwich structure,
R¹⁴ is 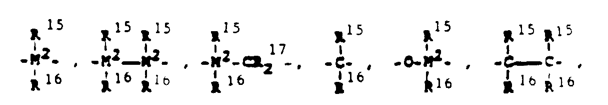 =BR¹⁵, =AIR¹⁵, -Ge-, -Sn-, -O- , -S-, =SO, =SO₂, =NR¹⁵, =CO, =PR¹⁵ or =P(O)R¹⁵, where R¹⁵, R¹⁶ and R¹⁷ are identical or different and are a hydrogen atom, a halogen atom, a C₁-C₁₀-alkyl group, a C₁-C₁₀-fluoralkyl group, a C₆-C₁₀-fluoraryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹⁵ and R¹⁶ or R¹⁵ and R¹⁷ each form a ring with the atoms joining them, and
M² is silicon, germanium or tin, where the polymerization is stopped at a time when Mw/Mn is ≤ 1.7.

2. The process as claimed in claim 1, wherein the polymerization is stopped at a time when Mw/Mn is ≤ 1.4.

## Revendications

1. Procédé de préparation d'un polymère ou d'un copolymère de cyclo-oléfine ayant une distribution de poids moléculaires (Mw/Mn) ≤ 1,7, par polymérisation de 5 0,1 à 100% en poids, sur la base de la quantité totale des monomères, d'au moins un monomère de formules I, II, III, IV, V ou VI 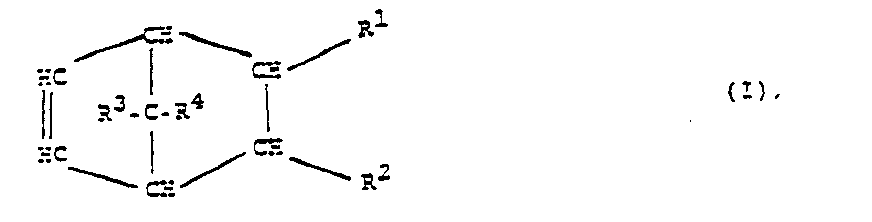 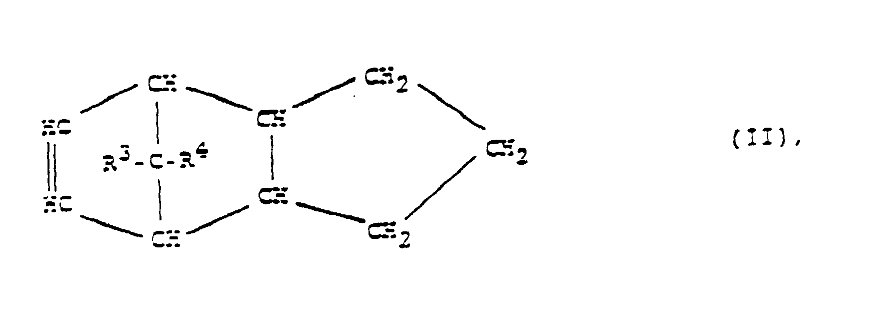 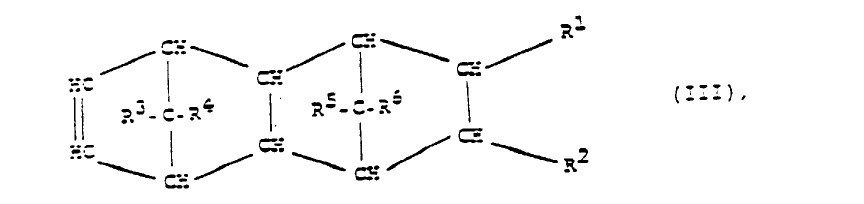 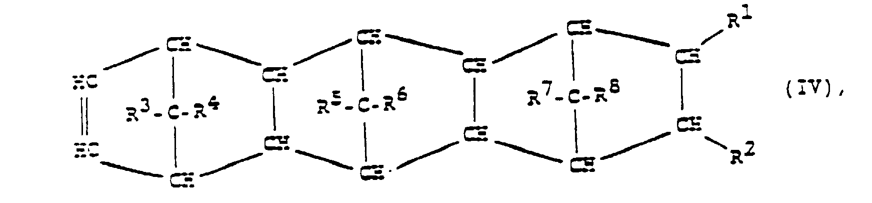 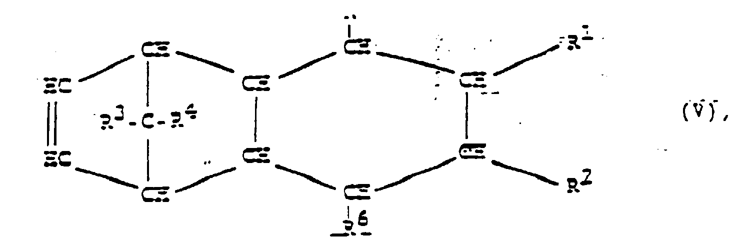 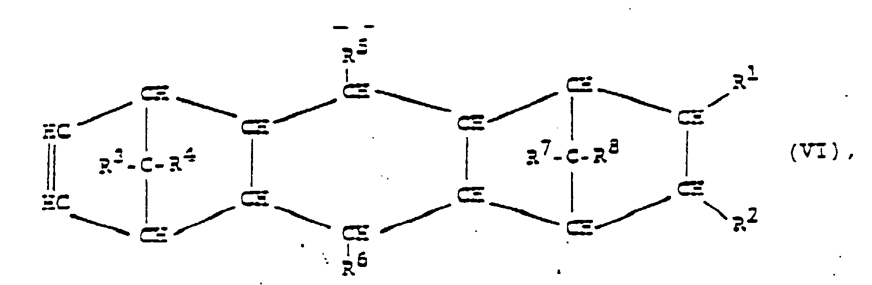 dans lesquelles R¹, R², R³, R⁴, R⁵, R⁶, R⁷ et R⁸ sont identiques ou différents et signifient un atome d'hydrogène ou un radical alkyle en C₁-C₈, des radicaux identiques dans les différentes formules pouvant avoir une signification différente,
de 0 à 99,9% en poids, sur la base de la quantité totale des monomères, d'une cyclooléfine de formule VII : 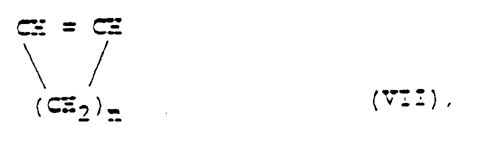 dans laquelle n est un nombre de 2 à 10, et
de 0 à 99,9% en poids d'éthylène, sur la base de la quantité totale des monomères, à des températures de -78 à 40°C et sous une pression de 0,01 à 64 bar, en présence d'un catalyseur, qui est constitué d'un aluminoxane de formule VIII : 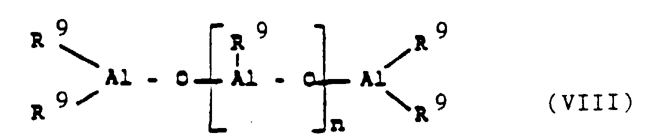 pour le type linéaire et/ou de formule IX : 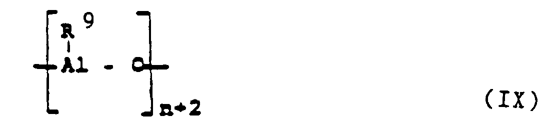 pour le type cyclique, les radicaux R⁹ des formules VIII et IX étant identiques ou différents et signifiant un radical alkyle en C₁-C₆ ou un phényle ou un benzyle, et n étant un nombre entier de 0 à 50, et d'un métallocène de formule X : 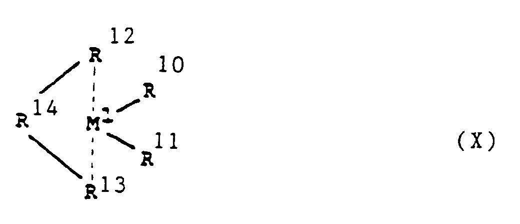 dans laquelle
M¹ est le titane, le zirconium, l'hafnium, le vanadium, le niobium ou le tantale;
R¹⁰ et R¹¹ sont identiques ou différents et signifient un atome d'hydrogène, un atome d'halogène, un radical alkyle en C₁-C₁₀, un radical alkoxy en C₁-C₁₀, un radical aryle en C₆-C₁₀, un radical aryloxy en C₆-C₁₀, un radical alcényle en C₂-C₁₀, un radical arylalkyle en C₇-C₄₀, un radical alkylaryle en C₇-C₄₀ ou un radical arylalcényle en C₈-C₄₀, et
R¹² et R¹³ signifient un radical hydrocarboné à un ou plusieurs noyaux, pouvant former avec l'atome central M¹ une structure en sandwich,
R¹⁴ est 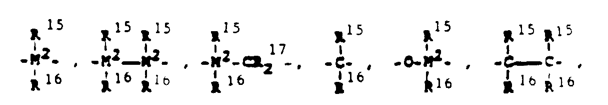 =BR¹⁵, =AlR¹⁵, -Ge-, -Sn-, -O-, -S-, =SO, =SO₂, =NR¹⁵, =CO, =PR¹⁵ ou =P(O)R¹⁵, où R¹⁵, R¹⁶ et R¹⁷ sont identiques ou différents et signifient un atome d'hydrogène, un atome d'halogène, un radical alkyle en C₁-C₁₀, un radical fluoroalkyle en C₁-C₁₀, un radical fluoroaryle en C₆-C₁₀, un radical aryle en C₆-C₁₀, un radical alkoxy en C₁-C₁₀, un radical alcényle en C₂-C₁₀, un radical arylalkyle en C₇₋₄₀, un radical arylalcényle en C₈₋₄₀ ou un radical alkylaryle en C₇₋₄₀, ou R¹⁵ et R¹⁶ ou R¹⁵ et R¹⁷ forment dans chaque cas un cycle avec les atomes qui y sont liés, et
M² est le silicium, le germanium ou l'étain, la polymérisation étant interrompue au moment où Mw/Mn ≤ 1,7.

2. Procédé suivant la revendication 1 ou 2, caractérisé en ce que l'on interrompt la polymérisation au moment où Mw/Mn ≤ 1,4.
